# EUROPEAN PATENT SPECIFICATION

(11) **EP 1 582 378 B1**
(45) Date of publication and mention of the grant of the patent: **02.07.2008**
(21) Application number: 05006605.9
(22) Date of filing: 24.03.2005
(51) Int. Cl.: B60C 11/00, B60C 1/00

(54) **Tire for motorcycle**
Motorradreifen
Pneumatique pour motocyclette

(30) Priority: 29.03.2004 JP 2004094437
(43) Date of publication of application: 05.10.2005
(73) Proprietor: SUMITOMO RUBBER INDUSTRIES LIMITED, Kobe-shi, Hyogo-ken (JP)
(72) Inventor: Funahara, Kiyoshi Sumitomo Rubber Industries, Ltd., Kobe-shi Hyogo 651-0072 (JP)
(74) Representative: Manitz, Finsterwald & Partner GbR

(56) References cited:
- US-A- 4 381 810
- PATENT ABSTRACTS OF JAPAN vol. 014, no. 393 (M-1015), 24 August 1990 (1990-08-24) & JP 02 147410 A (SUMITOMO RUBBER IND LTD), 6 June 1990 (1990-06-06)

## Description

This application claims priority on Patent Application No. 2004-94437 filed in JAPAN on March 29, 2004, the entire contents of which are hereby incorporated by reference.

### BACKGROUND OF THE INVENTION

### Field of the Invention

The present invention relates to a pneumatic tire which is to be attached to a motorcycle. More particularly, the present invention relates to an improvement in a tread of a tire.

### Description of the Related Art

In a tire for a motorcycle, a grip performance, an abrasion resistance performance and a handling stability performance are very important. In the tread of the tire, there were made various designs intended for an enhancement in each performance. Japanese Laid-Open Patent Publication No. Hei 2-147410 has disclosed a tread having a three-layer structure. The outermost layer of the tread directly comes in contact with a road surface. The outermost layer contributes to a grip performance. The outermost layer also slides over the road surface. The abrasion resistance performance is important for the outermost layer. An inner layer mainly contributes to the handling stability performance.

In recent years, the performance of a motorcycle has been enhanced. The motorcycle can run at a high speed. In the high speed running, a large amount of frictional heat is generated. By the continuous high speed running, the temperature of a tread is gradually raised. The tread is formed by a crosslinked rubber, so a bubble (that is, a blowhole) is generated on the tread due to a rise in the temperature. This phenomenon is referred to as foaming. When the bubble is generated, the tread is damaged greatly. A tread having an excellent durability in the high speed running has been desired.

If a tread is formed by a material which generates a bubble with difficulty, the foaming is suppressed. In the tread, however, it is hard to obtain a sufficient grip performance. It is an object of the present invention to provide a tire for a motorcycle which is excellent in a grip performance and a durability performance in high speed running.

### SUMMARY OF THE INVENTION

A tread of a tire for a motorcycle according to the present invention comprises an under layer, a base layer positioned on an outside in a radial direction of the under layer, and a cap layer positioned on an outside in a radial direction of the base layer. The foaming temperature of the under layer or the foaming temperature of the base layer is higher than that of the cap layer.

The foaming temperatures of the under layer, the base layer and the cap layer are measured by the following method. In the measurement of the foaming temperature of the under layer, there are prepared a large number of specimens formed by the same material as the under layer. The specimen is a cube having one side of 1 cm. A first specimen is put in an oven at a predetermined temperature and is held for 30 minutes. Then, the surface of the specimen is observed visually. Consequently, the presence of the foaming is decided. If the foaming is not generated, a second specimen is put in an oven having a temperature which is higher by 5 DEG C than the temperature of the oven described above. Similarly, the presence of foaming is decided. Thus, the specimen is sequentially put in ovens having higher temperatures by 5 DEG C. The temperature of the oven at which the foaming is first confirmed is the foaming temperature of the under layer. The temperature of each oven is set to be "0" or "5" for a units digit. The specimen is cut out of a plate-shaped member having a thickness of 1 cm which is obtained by crosslinking at 160 DEG C for 15 minutes. The foaming temperature of the base layer and the foaming temperature of the cap layer are also measured by the same method.

It is preferable that both the foaming temperature of the under layer and the foaming temperature of the base layer should be higher than that of the cap layer. It is preferable that the foaming temperature of the base layer should be higher than that of the cap layer, and the foaming temperature of the under layer should be higher than that of the base layer.

It is preferable that a difference between the foaming temperature of the base layer and that of the cap layer should be equal to or higher than 10°C and a difference between the foaming temperature of the under layer and that of the base layer should be equal to or higher than 10°C.

The present inventor paid attention to the fact that an inner part has a higher temperature than a surface in the tread during high speed running and foaming is first generated in the inner part. In the tire for a motorcycle according to the present invention, the foaming temperature of the inner part is higher than that of the cap layer. Therefore, foaming in the inner part is suppressed. In the tire, even if the high speed running is continuously carried out, a damage is caused with difficulty. In the tire, the cap layer exhibits an excellent grip performance. The tire is excellent in both the grip performance and a durability performance in the high speed running.

### BRIEF DESCRIPTION OF THE DRAWINGS

Fig. 1 is a sectional view showing a part of a tire for a motorcycle according to an embodiment of the present invention, and
Fig. 2 is an enlarged sectional view showing a part of a tread of the tire in Fig. 1.

### DESCRIPTION OF THE PREFERRED EMBODIMENTS

The present invention will be described below in detail based on preferred embodiments with reference to the drawings.

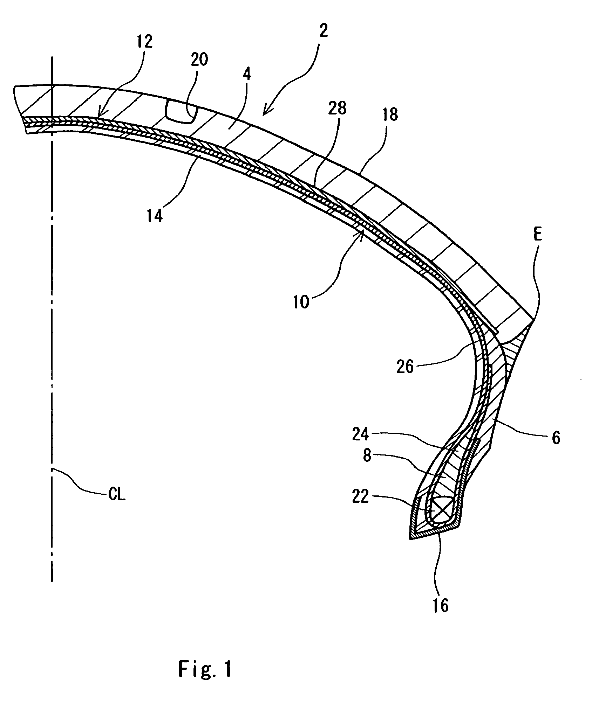

Fig. 1 shows a part of a tire 2 for a motorcycle. In Fig. 1, a vertical direction is set to be a radial direction of the tire 2, a transverse direction is set to be an axial direction of the tire 2, and a perpendicular direction to a paper is set to be a circumferential direction of the tire 2. The tire 2 takes an almost symmetrical shape about a one-dotted chain line CL in Fig. 1. The tire 2 comprises a tread 4, a sidewall 6, a bead 8, a carcass 10, a breaker 12, an inner liner 14, and a chafer 16.

The tread 4 takes the shape of an outward convex in the radial direction. The tread 4 has a three-layer structure as will be described below. The tread 4 forms a tread surface 18 to come in contact with a road surface. A groove 20 is provided on the tread surface 18. A tread pattern is formed by the groove 20.

The sidewall 6 is extended almost inward in the radial direction from the end of the tread 4. The sidewall 6 is formed by a crosslinked rubber. The sidewall 6 absorbs a shock from the road surface by a flexure. Moreover, the sidewall 6 prevents the external damage of the carcass 10.

The bead 8 is extended almost inward in the radial direction from the sidewall 6. The bead 8 includes a core 22 and an apex 24 extended outward in the radial direction from the core 22. The core 22 is ring-shaped and includes a plurality of non-extensible wires (typically, wires formed of steel). The apex 24 is outward tapered in the radial direction and is formed by a crosslinked rubber having a high hardness.

The carcass 10 is constituted by a carcass ply 26. The carcass ply 26 is laid between the beads 8 on both sides along the insides of the tread 4 and the sidewall 6. The carcass ply 26 is wound from an inside toward an outside in the axial direction around the core 22. The carcass ply 26 is constituted by a carcass cord and a topping rubber, which are not shown. The absolute value of an angle formed by the carcass cord in the circumferential direction is 75 to 90 degrees. In other words, the tire 2 is a radial tire. The carcass cord is usually constituted by an organic fiber. Examples of a preferable organic fiber include a nylon fiber, a rayon fiber, a polyester fiber, a polyethylene naphthalate fiber and an aramid fiber.

The breaker 12 is positioned on an outside in the radial direction of the carcass 10. The breaker 12 is provided on the carcass 10. The breaker 12 reinforces the carcass 10. The breaker 12 is constituted by a breaker ply 28. The breaker ply 28 is constituted by a breaker cord and a topping rubber, which are not shown. The breaker cord is extended in the circumferential direction and is wound spirally. The breaker cord is so-called "jointless". For a preferable material of the breaker cord, an aramid fiber and steel are used.

The inner liner 14 is bonded to the inner peripheral surface of the carcass 10. The inner liner 14 is formed by a crosslinked rubber. A rubber having a small air transmittance is used for the inner liner 14. The inner liner 14 plays a part in holding the internal pressure of the tire 2.

The chafer 16 is positioned in the vicinity of the bead 8. When the tire 2 is incorporated in a rim, the chafer 16 abuts on the rim. By the abutment, the vicinity of the bead 8 is protected. The chafer 16 is usually constituted by a cloth and a rubber impregnated into the cloth. It is also possible to use the chafer 16 formed by a rubber only.

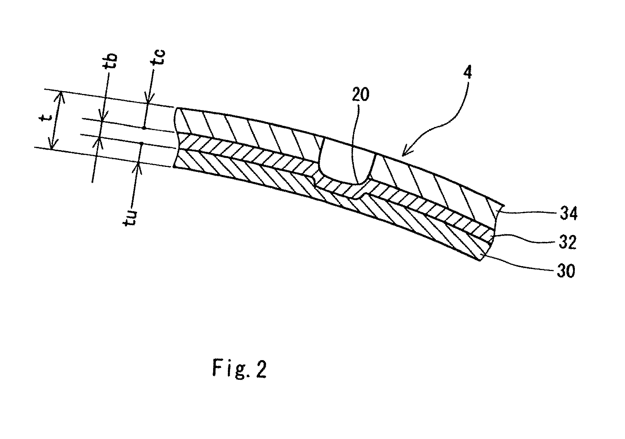

Fig. 2 is an enlarged sectional view showing a part of the tread 4 of the tire 2 in Fig. 1. The tread 4 includes an under layer 30, a base layer 32 and a cap layer 34. The base layer 32 is positioned on an outside in the radial direction of the under layer 30 and is provided on the under layer 30. The cap layer 34 is positioned on an outside in the radial direction of the base layer 32 and is provided on the base layer 32. The under layer 30, the base layer 32 and the cap layer 34 are formed by a crosslinked rubber.

A foaming temperature Tb of the base layer 32 is higher than a foaming temperature Tc of the cap layer 34. A foaming temperature Tu of the under layer 30 is higher than the foaming temperature Tb of the base layer 32. In other words, a crosslinked rubber having a higher foaming temperature toward an inside is used for the tread 4 of the tire 2. When the high speed running is continuously carried out, the temperature of the tread 4 is gradually raised. At this time, the tread 4 has a temperature distribution in the direction of a normal of the tread surface 18. More specifically, during the running, the temperature of the base layer 32 is higher than that of the cap layer 34 and the temperature of the under layer 30 is higher than that of the base layer 32. A rubber having a high foaming temperature is used for the under layer 30 and the base layer 32. Consequently, it is possible to suppress foaming in the under layer 30 and the base layer 32. The tire 2 is damaged with difficulty. A base layer 32 having the lower foaming temperature Tb than the foaming temperature Tu of an under layer 30 also contributes to a grip performance.

The cap layer 34 is constituted by a crosslinked rubber having a low foaming temperature. The cap layer 34 contributes to the grip performance. In the tire 2, the grip performance is compatible with a durability performance in the high speed running. In respect of the grip performance, it is preferable that the cap layer 34 should have a hardness of 55 to 70. The hardness is measured by means of a spring hardness meter of a JIS-A type. In the measurement, there is used a slab having a thickness of 2 mm which is obtained by crosslinking the same rubber composition as the cap layer 34 at 160°C for 10 minutes. In the measurement, three slabs are superposed.

In respect of the suppression of foaming and the grip performance, a difference (Tb - Tc) between the foaming temperature Tb of the base layer 32 and the foaming temperature Tc of the cap layer 34 is preferably equal to or higher than 5°C and is more preferably equal to or higher than 10°C. The difference (Tb - Tc) is equal to or lower than 30°C and is particularly equal to or lower than 15°C. In respect of the suppression of the foaming and the grip performance, a difference (Tu - Tb) between the foaming temperature Tu of the under layer 30 and the foaming temperature Tb of the base layer 32 is preferably equal to or higher than 5°C and is more preferably equal to or higher than 10°C. The difference (Tu - Tb) is equal to or lower than 30°C and is particularly equal to or lower than 15°C. It is preferable that the foaming temperature Tu of the under layer 30 should be 260°C to 290°C. It is preferable that the foaming temperature Tb of the base layer 32 should be 250°C to 280°C. It is preferable that the foaming temperature Tc of the cap layer 34 should be 240°C to 270°C.

In the measurement of the foaming temperature Tu of the under layer 30, there are prepared a large number of specimens formed by the same material as the under layer 30. The specimen is a cube having one side of 1 cm. A first specimen is put in an oven at a predetermined temperature and is held for 30 minutes. Then, the surface of the specimen is observed visually. Consequently, the presence of the foaming is decided. If the foaming is not generated, a second specimen is put in an oven having a temperature which is higher by 5°C than the temperature of the oven described above. Similarly, the presence of foaming is decided. Thus, the specimen is sequentially put in ovens having higher temperatures by 5°C. The temperature of the oven at which the foaming is first confirmed is the foaming temperature Tu of the under layer 30. The temperature of each oven is set to be "0" or "5" for a units digit. The specimen is cut out of a plate-shaped member having a thickness of 1 cm which is obtained by crosslinking at 160°C for 15 minutes. The foaming temperature Tb of the base layer 32 and the foaming temperature Tc of the cap layer 34 are also measured by the same method.

The foaming temperature Tu of the under layer 30 may be equal to the foaming temperature Tb of the base layer 32. In this case, the foaming temperature Tu of the under layer 30 and the foaming temperature Tb of the base layer 32 are set to be higher than the foaming temperature Tc of the cap layer 34. Either the foaming temperature Tu of the under layer 30 or the foaming temperature Tb of the base layer 32 may be set to be higher than the foaming temperature Tc of the cap layer 34.

In Fig. 2, an arrow t indicates the thickness of the tread 4, an arrow tu indicates the thickness of the under layer 30, an arrow tb indicates the thickness of the base layer 32, and an arrow tc indicates the thickness of the cap layer 34. The thicknesses t, tu, tb and tc are measured in the vicinity of a center in the axial direction excluding the groove 20. The measurement is carried out over a section obtained by cutting the tire 2 along a plane including an axis. The thickness t of the tread is 5 mm to 10 mm.

A ratio (tu/t) of the thickness tu of the under layer 30 to the thickness t of the tread 4 is preferably 0.1 to 0.5 and is more preferably 0.2 to 0.4. By setting the ratio (tu/t) within this range, it is possible to suppress the damage of the tire 2 which is caused by foaming. A ratio (tb/t) of the thickness tb of the base layer 32 to the thickness t of the tread 4 is preferably 0.1 to 0.5 and is more preferably 0.2 to 0.4. By setting the ratio (tb/t) within this range, it is possible to suppress the damage of the tire 2 which is caused by the foaming.

It is preferable that a ratio (tc/t) of the thickness tc of the cap layer 34 to the thickness t of the tread 4 should be 0.3 to 0.8. In some cases in which the ratio (tc/t) is lower than the range, a grip performance is insufficient. In this respect, it is more preferable that the ratio (tc/t) should be equal to or higher than 0.4. In some cases in which the ratio (tc/t) is higher than the range, a damage is caused by a bubble. From this viewpoint, it is preferable that the ratio (tc/t) should be equal to or lower than 0.7.

It is preferable that the under layer 30, the base layer 32 and the cap layer 34 should be extended wholly from an end E of the tread 4 (see Fig. 1) to the other end. Consequently, an excellent grip performance and durability can be exhibited irrespective of a bank angle during cornering.

### EXAMPLES

### [Preparation of Rubber Composition]

A base rubber and various additives were kneaded by means of a kneading machine so that rubber compositions of types A to D were obtained. The details of blend of the rubber compositions are shown in the following Table 1.

**Table 1 Specification of Rubber Composition**

| | | | | |
|---|---|---|---|---|
| (Part by Weight) | | | | |

| Type | A | B | C | D |
|---|---|---|---|---|
| Styrene-butadiene rubber | 100 | - | 25 | 100 |
| Natural rubber | - | 100 | 75 | - |
| SAF carbon black | 100 | - | - | 100 |
| HAF carbon black | - | 65 | 75 | - |
| Aromatic oil | 65 | 2 | 10 | 60 |
| Anti-aging agent | 2.0 | 2.0 | 2.0 | 2.0 |
| Stearic acid | 2.5 | - | 2.0 | 2.5 |
| Sulfur | 2.0 | 4.0 | 1.5 | 2.0 |
| Vulcanization accelerator | 3.5 | 1.0 | 1.5 | 3.0 |
| Foaming temperature (°C) | 240 | 260 | 270 | 280 |
| Hardness Hs (JIS-A) | 67 | 61 | 52 | 67 |

### [Example 1]

There was obtained a tire for a motorcycle which has the structure shown in Figs. 1 and 2. The tread of the tire includes an under layer, a base layer and a cap layer. The under layer is formed by a rubber composition of a type D and has a foaming temperature Tu of 280°C. The base layer is formed by a rubber composition of the type B and has a foaming temperature Tb of 260°C. The cap layer is formed by a rubber composition of a type B and has a foaming temperature Tc of 260°C. The under layer has a thickness tu of 0. 7 mm, the base layer has a thickness tb of 1.5 mm, and the cap layer has a thickness tc of 5.8 mm. The tire has a size of "190/50 ZR17".

### [Examples 2 to 4 and Comparative Examples 1 to 3]

A tire according to each of examples 2 to 4 and comparative examples 1 to 3 was obtained in the same manner as in the example 1 except that the rubber composition of each layer was set as shown in the following Table 2.

### [Sensuous Evaluation]

A tire was incorporated in a rim of "MT 6.00 x 17" and was filled with air in such a manner that an internal pressure was 290 kPa. The tire was attached to a motorcycle having a displacement of 1000 cm³. The motorcycle was caused to carry out cornering at a speed of 60 km/h and a rider was caused to evaluate a grip performance. This result is shown in the following Table 2. When a numeric value in the Table 2 is greater, the evaluation is more excellent.

### [Evaluation of Durability Performance in High Speed Straight Running]

A tire was attached to a drum type running test machine. The test machine was operated for 10 minutes at a speed of 250 km/h. Then, the test machine was operated for 10 minutes at a higher speed by 10 km/h. In the same manner, subsequently, the operation was carried out for 10 minutes by sequentially increasing the speed by 10 km/h. A speed at which a damage is generated is shown in the following Table 2.

**Table 2 Result of Evaluation**

| | | Compara. example 1 | Compara. example 2 | Example 1 | Example 2 | Example 3 | Example 4 | Compara. example 3 |
|---|---|---|---|---|---|---|---|---|
| Cap layer | Type of rubber composition | B | B | B | B | B | B | D |
| | Foaming temperature (°C) | 260 | 260 | 260 | 260 | 260 | 260 | 280 |
| Base layer | Type of rubber composition | B | B | B | C | C | D | B |
| | Foaming temperature (°C) | 260 | 260 | 260 | 270 | 270 | 280 | 260 |
| Under layer | Type of rubber composition | A | B | D | C | D | D | B |
| | Foaming temperature (°C) | 240 | 260 | 280 | 270 | 280 | 280 | 260 |
| Grip performance | | 4.0 | 3.0 | 4.0 | 4.0 | 4.0 | 3.5 | 3.0 |
| Durability in high speed running | | 290 | 300 | 310 | 310 | 320 | 320 | 300 |

As shown in the Table 2, the tire according to each of the examples is excellent in the grip performance and the durability performance in the high speed running. From the results of the evaluation, the advantages of the present invention are apparent.

The tire according to the invention can be attached to various motorcycles. The tire is particularly suitable for a motorcycle having a displacement of 1000 cm³ or more. The above description is only illustrative and various changes can be made without departing from the scope of the present invention.

## Claims

1. A tire for a motorcycle comprising an under layer (30), a base layer (32) positioned on an outside in a radial direction of the under layer (30), and a cap layer (34) positioned on an outside in a radial direction of the base layer (32), **characterised in that**
the foaming temperature of the under layer (30) or the foaming temperature of the base layer (32) is higher than that of the cap layer (34), and **in that** the foaming temperature is measured by a method described in the second paragraph of the "SUMMARY OF THE INVENTION" in the specification.

2. The tire according to claim 1, wherein both the foaming temperature of the under layer (30) and the foaming temperature of the base layer (32) are higher than that of the cap layer (34).

3. The tire according to claim 2, wherein the foaming temperature of the base layer (32) is higher than that of the cap layer (34), and the foaming temperature of the under layer (30) is higher than that of the base layer (32).

4. The tire according to claim 3, wherein a difference between the foaming temperature of the base layer (32) and that of the cap layer (34) is equal to or higher than 10 DEG C and a difference between the foaming temperature of the under layer (30) and that of the base layer (32) is equal to or higher than 10 DEG C.

## Patentansprüche

1. Reifen für ein Motorrad mit einer Unterschicht (30), einer Basisschicht (32), die an einer Außenseite in einer radialen Richtung der Unterschicht (30) angeordnet ist, und einer Deckschicht (34), die an einer Außenseite in einer radialen Richtung der Basisschicht (32) angeordnet ist, **dadurch gekennzeichnet, dass**
die Schaumbildungstemperatur der Unterschicht (30) oder die Schaumbildungstemperatur der Basisschicht (32) höher ist als die der Deckschicht (34),
und dass die Schaumbildungstemperatur durch ein Verfahren gemessen wird, das in dem zweiten Absatz der "SUMMARY OF THE INVENTION" in der Beschreibung beschrieben ist.

2. Reifen nach Anspruch 1, wobei sowohl die Schaumbildungstemperatur der Unterschicht (30) als auch die Schaumbildungstemperatur der Basisschicht (32) höher sind als die der Deckschicht (34).

3. Reifen nach Anspruch 2, wobei die Schaumbildungstemperatur der Basisschicht (32) höher ist als die der Deckschicht (34), und die Schaumbildungstemperatur der Unterschicht (30) höher ist als die der Basisschicht (32).

4. Reifen nach Anspruch 3, wobei eine Differenz zwischen der Schaumbildungstemperatur der Basisschicht (32) und der der Deckschicht (34) gleich ist oder höher ist als 10 Grad C und eine Differenz zwischen der Schaumbildungstemperatur der Unterschicht (30) und der der Basisschicht (32) gleich oder höher ist als 10 Grad C.

## Revendications

1. Pneumatique pour motocyclette, comprenant une sous-couche (30), une couche de base (32) positionnée sur un côté extérieur dans une direction radiale de la sous-couche (30), et une couche de couverture (34) positionnée sur un côté extérieur dans une direction radiale de la couche de base (32), **caractérisé en ce que** la température de moussage de la sous-couche (30) ou la température de moussage de la couche de base (32) est supérieure à celle de la couche de couverture (34), et **en ce que** la température de moussage est mesurée par un procédé décrit dans le second paragraphe du "sommaire de l'invention" dans la description.

2. Pneumatique selon la revendication 1, dans lequel la température de moussage de la sous-couche (32) et la température de moussage de la couche de base (32) sont toutes deux supérieures à celles de la couche de couverture (34).

3. Pneumatique selon la revendication 2, dans lequel la température de moussage de la couche de base (32) est supérieure à celle de la couche de couverture (34), et la température de moussage de la sous-couche (30) est supérieure à celle de la couche de base (32).

4. Pneumatique selon la revendication 3, dans lequel une différence entre la température de moussage de la couche de base (32) et celle de la couche de couverture (34) est égale ou supérieur à 10°C, et une différence entre la température de moussage de la sous-couche (30) et celle de la couche de base (32) est égale ou supérieure à 10°C.
